# FASCICULE DE BREVET EUROPEEN

(11) **EP 1 782 119 B1**
(45) Date de publication et mention de la délivrance du brevet: **07.05.2008**
(21) Numéro de dépôt: 05726953.2
(22) Date de dépôt: 22.02.2005
(51) Int. Cl.: G02C 1/02

(54) **LUNETTES DE TYPE SANS ENTOURAGE, A BRANCHES FILAIRES DEFORMABLES EN FLEXION SANS ARTICULATION**
BRILLE DES RAHMENLOSEN TYPS MIT GELENKFREIEN BIEGBAREN DRAHT-SEITENBÜGELN
FRAMELESS-TYPE SPECTACLES COMPRISING HINGE-FREE, BENDABLE WIRE SIDEARMS

(30) Priorité: 19.08.2004 FR 0408983
(43) Date de publication de la demande: 09.05.2007
(73) Titulaire: Minima, 91310 Linas (FR)
(72) Inventeur: PERIE, Jean-Claude, F-82003 MONTAUBAN (FR)
(74) Mandataire: Jaunez, Xavier
(86) Numéro de dépôt international: PCT/FR2005/000406
(87) Numéro de publication internationale: WO 2006/027428

(56) Documents cités:
- EP-A- 0 814 359
- US-A- 5 367 344
- US-A1- 2001 019 395
- US-A1- 2004 051 843
- PATENT ABSTRACTS OF JAPAN vol. 2003, no. 02, 5 février 2003 (2003-02-05) & JP 2002 318372 A (REAL VISION:KK), 31 octobre 2002 (2002-10-31)

## Description

### DOMAINE DE L'INVENTION

La présente invention concerne le domaine des lunettes du type sans entourage, comportant un pontet reliant les deux verres de lunettes, et deux branches latérales reliées à une zone latérale respective du verre correspondant.

### ARRIERE-PLAN DE L'INVENTION

Les lunettes dites sans entourage, ou encore à monture percée du fait des perçages pratiqués dans l'épaisseur des verres pour la fixation de la monture, sont de plus en plus répandues.

On pourra se référer aux documents WO-2004/003632A, WO-02/21193A, EP- 1107042A, WO-96/05535A, US- 6447117A, WO-00/26716A, EP-1382988A, WO-03/014804A, WO-02/095482A et WO-02/095481A.

Dans la plupart des agencements précités, on prévoit dans chaque verre un perçage traversant et une encoche latérale débouchante, ou encore deux perçages traversants, pour chaque élément constitutif de la monture, à savoir le pontet et les deux branches latérales.

Le document US-5835183A prévoit des éléments de charnières qui sont fixés aux parties latérales des verres par une partie en forme de S, dont l'extrémité libre passe par un perçage traversant, et la branche centrale passe dans une encoche latérale débouchante. La partie terminale, formant ainsi une boucle, est conçue pour serrer élastiquement la partie de verre intermédiaire, ce serrage étant de plus renforcé par des éléments visant à augmenter la résistance à la friction, en particulier au moyen de dentures venant mordre la surface du verre correspondant au niveau du perçage traversant et de l'encoche latérale débouchante. Ceci présente toutefois l'inconvénient d'altérer la surface du verre ainsi rabotée par les dentures, et de fragiliser la zone du verre, qui est parfois étroite, enserrée entre les deux portions de branche formant une pince.

Les documents JP2002/318 372 A et EP 0 814 359 A illustrent des montures filaires, dont les branches, avec articulation, ou sans articulation mais avec déformation en flexion, présentent des extrémités distales en forme de crochet, avec une portion terminale de branche passant dans une encoche latérale débouchante du verre, et une portion courte de serrage passant dans un perçage du verre, ces deux portions formant une pince qui serre la partie du verre qui est entre le perçage et l'encoche latérale débouchante pour assurer le maintien en place de la branche. Le serrage du verre est d'ailleurs encore renforcé dans l'agencement du document JP 2002/318 372 A du fait de l'inclinaison de la portion courte vers la portion terminale de branche, et de l'inclinaison correspondante de l'axe du perçage du verre, avec un éventuel manchon interposé dans l'encoche pour former par sa bride une entretoise qui évite un relâchement du serrage.

Il a par ailleurs été proposé de réaliser des lunettes du type sans entourage dont les branches latérales sont déformables en flexion sans articulation. On utilise pour cela une technique de formage mettant à profit les capacités de mémoire de forme de certains alliages métalliques. Pour la fixation de tels types de branches déformables en flexion sans articulation, on utilise en général un encastrement de pions passant dans des perçages, comme cela est par exemple décrit dans les documents WO-03/083553A et US-5 367 344A.

Dans la plupart des cas, les extrémités d'accrochage des branches latérales présentent une configuration complexe, avec de multiples cintrages, ce qui implique un coût de fabrication élevé. De plus, il est parfois nécessaire d'effectuer ces cintrages in situ, après avoir enfilé une extrémité rectiligne et non encore cintrée de branche dans un perçage du verre, ce qui est particulièrement incommode pour l'opérateur.

### OBJET DE L'INVENTION

La présente invention vise à proposer des lunettes du type sans entourage qui sont plus performantes, à la fois par la simplicité de leur structure et par la commodité de leur montage.

### DEFINITION GENERALE DE L'INVENTION

Ce problème est résolu conformément à l'invention grâce à des lunettes du type sans entourage, comportant un pontet reliant les deux verres de lunettes, et deux branches latérales reliées à une zone latérale respective du verre correspondant, lesdites branches latérales étant de structure filaire et déformables en flexion sans articulation, lesdites lunettes étant remarquables en ce que chaque branche latérale présente une extrémité distale agencée pour s'accrocher sur la zone latérale du verre, ladite extrémité distale ayant la forme générale d'un J, avec une portion longue prolongeant la partie principale de la branche et passant dans un perçage traversant du verre avec interposition d'un manchon souple de serrage qui assure le maintien en place de l'extrémité distale, et une portion courte d'anti-rotation revenant vers l'arrière et passant dans une encoche latérale débouchante ou dans un autre perçage traversant du verre, sans serrer le verre entre ladite portion longue et ladite portion courte, la portion centrale joignant la portion longue et la portion courte s'étendant au voisinage de la face frontale du verre. Le terme "extremité distale" doit être compris dans le sens de "extremité frontale".

De préférence, chaque branche latérale comporte une partie principale et une portion longue d'extrémité distale qui sont conformées en section et en profil pour passer dans le perçage traversant du verre, pour permettre une mise en place de ladite branche latérale par simple enfilage par le côté frontal du verre. La mise en place est ainsi considérablement facilitée, et peut s'effectuer sans l'aide d'un quelconque outil. La liaison entre la branche latérale et le verre est en outre parfaitement fiable, avec un serrage durable au niveau du manchon souple, et sans effet de pincement du verre entre les deux portions longue et courte de l'extrémité distale en forme de J.

On pourra prévoir que chaque branche latérale est constituée d'une pièce métallique unique, ou en variante est constituée de plusieurs pièces fixées par emboîtement.

L'extrémité distale en forme de J de chaque branche latérale s'étend avantageusement dans un plan sensiblement horizontal.

De préférence encore, la portion principale de chaque branche latérale présente une partie centrale aplatie augmentant la flexibilité de ladite branche dans les directions de manoeuvre de celle-ci.

On pourra prévoir que la portion longue d'extrémité distale de chaque branche latérale présente des picots ou dentures en saillie qui s'ancrent dans le manchon souple de serrage quand ladite branche latérale est en place.

Avantageusement encore, la portion longue d'extrémité distale de chaque branche latérale se raccorde à la partie principale de la branche par un coude permanent formant un angle obtus.

On pourra également prévoir que la portion longue d'extrémité distale de chaque branche latérale s'étend depuis l'arrière du verre en étant rectiligne sur une distance au moins égale à l'épaisseur du verre. Ceci permet de faciliter un éventuel démontage visant à désolidariser une branche latérale du verre correspondant.

Avantageusement encore, chaque manchon souple de serrage est une pièce rapportée qui est insérée dans le perçage correspondant du verre. En particulier, chaque manchon de serrage présente à une extrémité une collerette venant en appui contre une face du verre correspondant. Ceci permet un positionnement précis du manchon souple, sans risque d'expulsion de celui-ci lors du montage de la branche latérale.

En variante on pourra prévoir que chaque manchon de serrage est réalisé in situ lorsque la branche latérale associée est en place, par moulage ou injection de matière plastique dans le perçage correspondant du verre.

De préférence enfin, chaque branche latérale est réalisée en fil métallique, en particulier en fil de titane, dont la section ronde est éventuellement aplatie verticalement au niveau de sa partie principale.

En variante, on pourra prévoir que chaque branche latérale est réalisée en matière plastique, en particulier en polyacétate ou polycarbonate.

D'autres caractéristiques et avantages de l'invention apparaîtront plus clairement à la lumière de la description qui va suivre, en référence aux figures des dessins annexés qui illustrent un mode de réalisation préféré.

### BREVE DESCRIPTION DES DESSINS

- la figure 1 illustre en perspective des lunettes du type sans entourage conformes à l'invention ;
- la figure 2 est une vue de dessus des lunettes précitées, vue sur laquelle les extrémités d'accrochage des branches latérales sont vues par transparence ;
- la figure 3 est une vue partielle en perspective, à plus grande échelle, permettant de mieux distinguer la zone d'accrochage d'une branche latérale ;
- la figure 4 est une coupe selon IV-IV de la figure 3 ;
- la figure 5 est une vue en perspective illustrant une variante dans laquelle la portion courte d'anti-rotation passe dans un autre perçage traversant du verre ;
- la figure 6 est une coupe selon VI-VI de la figure 5 ;
- la figure 7 est une vue partielle d'une extrémité distale d'une branche latérale présentant des dentures en saillie pour l'ancrage dans le manchon souple de serrage ;
- les figures 8 et 9 sont des vues respectivement de dessus et de côté d'une branche latérale, dont l'extrémité proximale ne présente aucun élément de recouvrement tel que manchon ou boule, cette situation correspondant au montage initial de la branche latérale ; et
- la figure 10 est une vue schématique illustrant les différentes positions relatives entre la branche latérale précitée et le verre correspondant au fur et à mesure de l'enfilage par le côté frontal du verre.

### DESCRIPTION DETAILLEE DU MODE DE REALISATION PREFERE

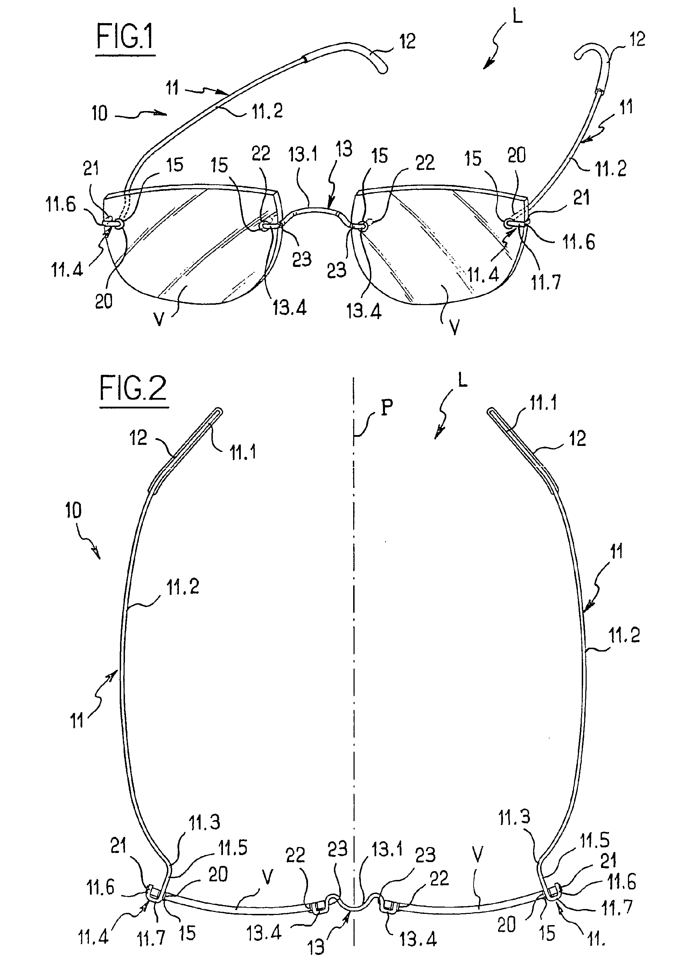

Comme représenté sur les figures 1 et 2, l'invention concerne des lunettes du type sans entourage. Ces lunettes comportent deux verres V et une monture 10 qui est de type filaire. La monture 10 comporte un pontet 13 reliant les deux verres de lunettes V, et deux branches latérales 11 reliées à une zone latérale respective du verre V correspondant.

Les branches latérales 11 sont non seulement de structure filaire, mais sont également déformables en flexion sans articulation. Ceci est nettement visible sur la figure 2, où l'on constate une réalisation unitaire et continue, sans présence d'un élément de charnière d'axe vertical.

En l'espèce, les extrémités proximales 11.1 des branches latérales 11 sont revêtues d'un élément de recouvrement 12, qui peut être un manchon, ou en variante une boule ou analogue.

Chaque branche latérale 11 présentent ainsi successivement une extrémité proximale 11.1, ici revêtue d'un manchon 12, puis une partie principale 11.2 qui est légèrement cintrée, et s'étend jusqu'à un coude permanent 11.3 formant un angle obtus. Au-delà de ce coude 11.3, on trouve une extrémité distale 11.4 qui est agencée pour s'accrocher sur la zone latérale du verre V correspondant.

Cette extrémité distale 11.4 a la forme générale d'un J (en vue de dessus ou en vue de dessous selon la branche qui est observée), avec une portion longue 11.5 et une portion courte 11.6, lesdites portions étant raccordées entre elles par une portion centrale 11.7.

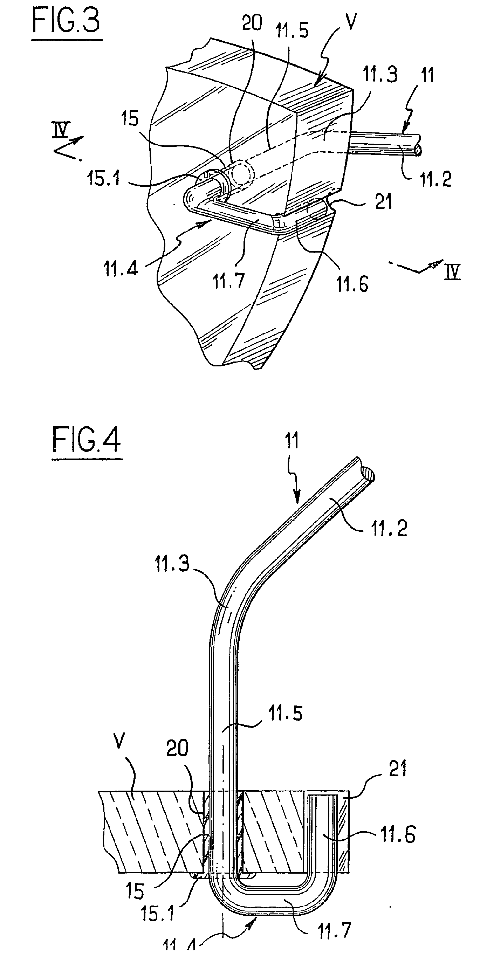

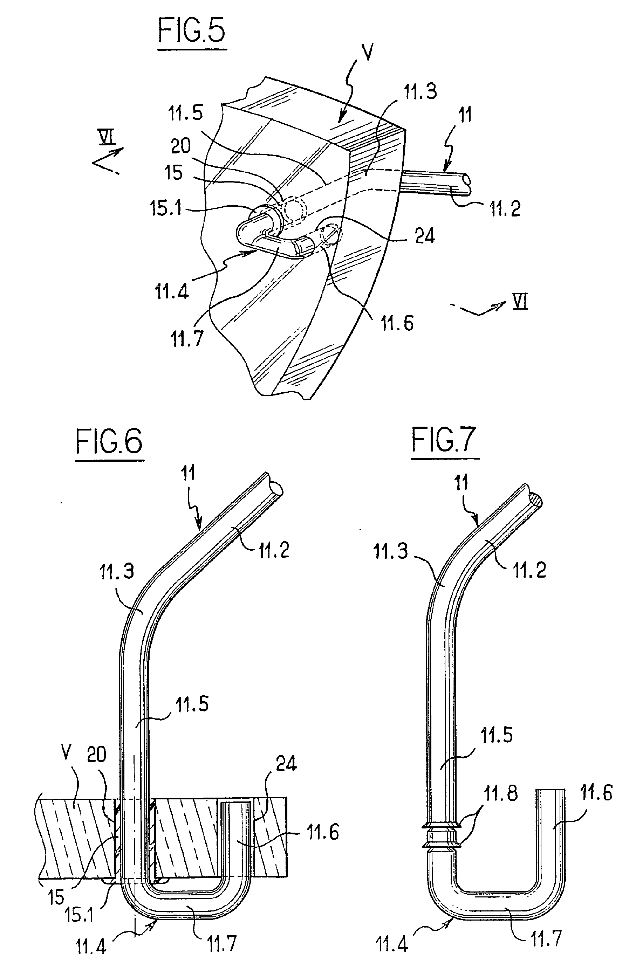

Conformément à un aspect essentiel de l'invention, la portion longue 11.5 prolongeant la partie principale 11.2 de la branche passe dans un perçage traversant 20 du verre V avec interposition d'un manchon souple de serrage 15 qui assure le maintien en place de l'extrémité distale 11.4, et la portion courte d'anti-rotation 11.6 revenant vers l'arrière passe soit dans une encoche latérale débouchante 21, comme cela est mieux visible sur les détails des figures 3 et 4, soit en variante dans un autre perçage traversant 24, comme cela est visible sur les figures 5 et 6, et ce sans serrer le verre entre la portion longue 11.5 et la portion courte 11.6, la portion centrale 11.7 s'étendant quant à elle au voisinage de la face frontale du verre V.

Le pontet 13, de structure également filaire, est quant à lui de conception classique, avec une partie principale cintrée 13.1, et des extrémités latérales 13.4 d'accrochage qui coopèrent avec un perçage 22 et une encoche latérale débouchante 23 du verre V correspondant pour la liaison entre le pontet et les deux verres de lunettes. On distingue ainsi les portions d'accrochage 13.4 du pontet, qui s'accrochent sur la zone du verre correspondant par simple élasticité. On pourra d'ailleurs prévoir, pour les extrémités du pontet qui passent dans un trou traversant 22 l'interposition d'un manchon souple de serrage analogue aux manchons 15 utilisés pour le maintien des branches latérales. On pourra également prévoir un pontet de structure différente, en particulier agencé pour porter des plaquettes nasales.

Si l'on considère la figure 2, on constate que la portion longue 11.5 est plus à l'intérieur du verre que la portion courte 11.6, et que cette portion longue 11.5 passe par un perçage traversant 20 dudit verre. Cet agencement va à l'encontre des agencements classiques précités qui présentent des extrémités distales d'accrochage ayant une forme de crochet, ces agencements antérieurs comportant toujours une portion terminale de branche passant dans une encoche débouchante et une portion courte de serrage passant dans un perçage du verre, ces deux portions formant une pince qui serre la partie concernée du verre. Par suite, lors des manoeuvres des branches, et ce surtout dans la mesure où il s'agit de branches filaires déformables en flexion sans articulation, on imprime des efforts non négligeables au niveau de l'ancrage de la branche dans le verre. Or, avec l'agencement selon l'invention, le passage dans un perçage traversant procure un effet de butée latérale extrêmement favorable, que l'on ne pouvait pas obtenir dans les réalisations antérieures avec un passage dans une encoche latérale débouchante.

Les figures 3 et 4 permettent de mieux appréhender l'agencement de l'invention.

On constate en l'espèce que l'extrémité distale 11.4 en forme de J de chaque branche latérale 11 s'étend dans un plan sensiblement horizontal. Ceci permet d'éviter toute torsion parasite de la branche lors des manoeuvres de celle-ci.

En outre, la portion longue 11.5 d'extrémité distale de chaque branche latérale 11 se raccorde à la partie principale 11.2 de la branche par un coude permanent 11.3 formant un angle obtus. De plus, cette portion longue 11.5 s'étend depuis l'arrière du verre V en étant rectiligne sur une distance au moins égale à l'épaisseur du verre, ainsi que cela est mieux visible sur la figure 4. Ceci permet de faciliter un éventuel dégagement ultérieur pour démonter la branche latérale.

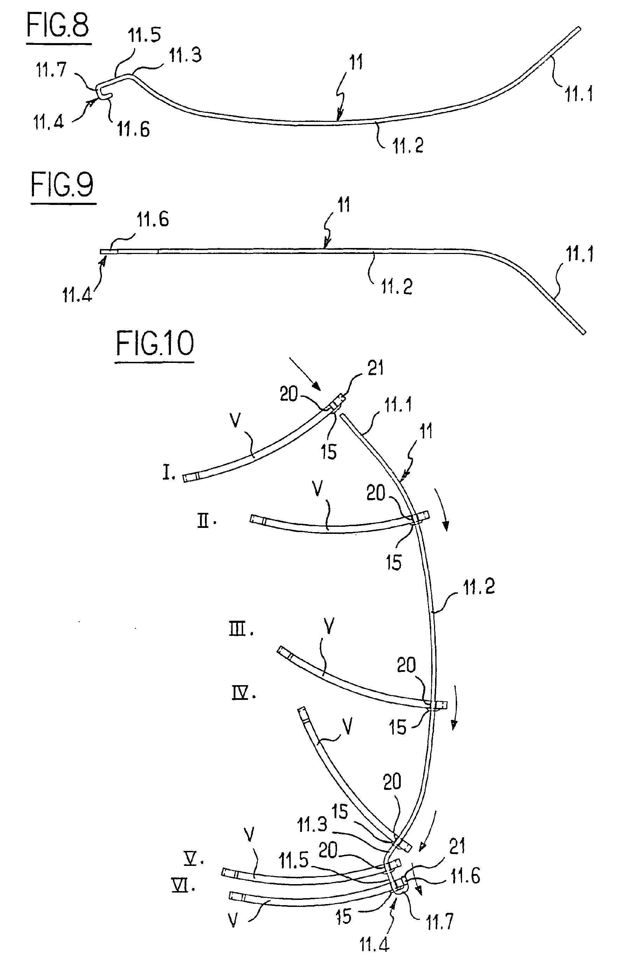

On distingue en outre un manchon souple de serrage 15, qui présente ici à une extrémité une collerette 15.1 venant en appui contre une face du verre V correspondant. Dans la pratique, et comme on le verra par la suite en référence à la figure 10, le montage de chaque branche latérale 11 se fait par simple enfilage par le côté frontal du verre, de sorte qu'il apparaît préférable de disposer le manchon souple 15 de telle façon que sa collerette 15.1 vienne en appui contre la face frontale du verre. Ceci permet de s'assurer que le manchon souple de serrage 15 ne sera pas expulsé lors du passage de la branche latérale.

En l'espèce, le manchon souple de serrage 15 est une pièce rapportée qui est insérée dans le perçage correspondant du verre. On pourra en variante prévoir que le manchon souple de serrage 15 est réalisé in situ lorsque la branche latérale associée 11 est en place, par moulage ou injection de matière plastique, par exemple du silicone, dans le perçage correspondant du verre.

Comme cela est visible sur la figure 4, on constate que la portion courte 11.6, qui est ici reçue dans l'encoche latérale débouchante 21, n'enserre pas la partie concernée du verre en formant une pince comme c'était fréquemment le cas dans les agencements antérieurs. La portion courte 11.6 sert en l'espèce seulement à assurer une fonction d'anti-rotation, le maintien en place de la branche étant exclusivement assuré par la portion longue 11.5 qui est bloquée dans son manchon souple de serrage 15.

Les figures 5 et 6 illustrent une variante dans laquelle la portion courte d'anti-rotation 11.6 revenant vers l'arrière passe non pas dans une encoche latérale débouchante comme s'était le cas précédemment, mais dans un autre perçage traversant 24 du verre. La disposition est par ailleurs identique à celle qui a été décrite en référence aux figures précédentes.

On pourrait en variante renverser le J, à condition toutefois que la portion longue reste encore dans un perçage, et ne soit pas positionnée dans une encoche latérale débouchante comme s'était le cas dans les agencements antérieurs. On perdrait en effet alors l'effet de butée précité.

Comme cela est illustré sur la figure 7, on pourra prévoir que la portion longue 11.5 de l'extrémité distale de chaque branche latérale 11 présente des picots ou dentures en saillie 11.8, qui s'ancrent dans le manchon souple de serrage 15 quand la branche latérale est en place.

Conformément à un autre aspect important de l'invention, chaque branche latérale 11 comporte une partie principale 11.2 et une portion longue 11.5 d'extrémité distale qui sont conformées en section et en profil pour passer dans le perçage traversant 20 du verre V, pour permettre une mise en place de ladite branche latérale par simple enfilage par le côté frontal du verre.

Les figures 8 et 9 permettent de mieux distinguer la conformation d'une branche latérale 11, et on notera que son extrémité proximale 11.1 n'est pas revêtue d'un manchon ou analogue. Cette branche latérale 11 sera de préférence réalisée en fil métallique, en particulier en fil de titane, avec une section ronde qui est éventuellement localement aplatie verticalement au niveau de sa partie principale 11.2 afin d'augmenter la flexibilité de ladite branche dans les directions de manoeuvre de celle-ci. En variante, la branche latérale 11 pourra être réalisée en matière plastique, en particulier en polyacétate ou polycarbonate.

En l'espèce, chaque branche latérale 11 est constituée d'une pièce unique, mais on pourra prévoir dans une variante non représentée ici que la branche latérale est constituée de plusieurs pièces fixées par emboîtement. De même, on pourra utiliser une section de forme différente, par exemple plate, le perçage et l'encoche étant alors conformés pour s'adapter à la forme de la section.

Sur la figure 10, on a illustré le processus de mise en place, qui est réalisé manuellement, d'une branche latérale par simple enfilage par le côté frontal du verre correspondant V.

Sur cette figure, on a illustré diverses positions relatives entre le verre et la branche latérale.

Sur la position I, le bout de l'extrémité proximale 11.1 de la branche 11 est en face du perçage traversant 20, ici garni de son manchon souple de serrage 15, de façon à être prêt pour l'enfilage.

Les positions II, III, IV et V correspondent à des positions successives d'enfilage, au cours desquelles différentes parties de la branche filaire passent dans le perçage traversant 20 garni de son manchon souple 15, jusqu'à arriver à l'extrémité distale d'accrochage 11.4 de ladite branche. La dernière phase de déplacement, pour arriver à la position finale VI, est un simple coulissement rectiligne qui va amener la portion courte 11.6 dans l'encoche latérale débouchante 21 du verre.

On constate donc que la branche latérale 11 est montée rapidement et aisément, et sans l'aide d'un quelconque outil.

Si l'on souhaite ensuite désolidariser l'ensemble, il suffit de procéder de façon inverse, ce qui permet de changer la branche latérale en conservant le même verre ou inversement.

Comme indiqué plus haut, le manchon souple de serrage 15, qu'il soit constitué par une pièce rapportée ou réalisé in situ par moulage ou injection dans le perçage du verre, assure seul le maintien en place de l'extrémité distale d'accrochage 11.4. On pourra par exemple utiliser un matériau souple tel que du polyamide 6 ou du silicone, ces matériaux étant en outre transparents pour une plus grande discrétion.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Lunettes du type sans entourage, comportant un pontet (13) reliant les deux verres de lunettes (V), et deux branches latérales (11) reliées à une zone latérale respective du verre (V) correspondant, lesdites branches latérales (11) étant de structure filaire et déformables en flexion sans articulation, **caractérisées en ce que** chaque branche latérale (11) présente une extrémité distale (11.4) agencée pour s'accrocher sur la zone latérale du verre (V), ladite extrémité distale ayant la forme générale d'un J, avec une portion longue (11.5) prolongeant la partie principale (11.2) de la branche et passant dans un perçage traversant (20) le verre (V) avec interposition d'un manchon souple de serrage (15) qui assure le maintien en place de l'extrémité distale (11.4), et une portion courte d'anti-rotation (11.6) revenant vers l'arrière et passant dans une encoche latérale débouchante (21) ou dans un autre perçage traversant (24) le verre, sans serrer le verre entre ladite portion longue et ladite portion courte et sans effet de pincement, la portion centrale (11.7) joignant la portion longue (11.5) et la portion courte (11.6) s'étendant au voisinage de la face frontale du verre (V).

2. Lunettes selon la revendication 1, **caractérisées en ce que** chaque branche latérale (11) comporte une partie principale (11.2) et une portion longue (11.5) d'extrémité distale qui sont conformées en section et en profil pour passer dans le perçage traversant (20) le verre(V), pour permettre une mise en place de ladite branche latérale par simple enfilage par le côté frontal du verre.

3. Lunettes selon la revendication 1 ou la revendication 2, **caractérisées en ce que** chaque branche latérale (11) est constituée d'une pièce métallique unique.

4. Lunettes selon la revendication 1 ou la revendication 2, **caractérisées en ce que** chaque branche latérale (11) est constituée de plusieurs pièces fixées par emboîtement.

5. Lunettes selon l'une des revendications 1 à 4, **caractérisées en ce que** l'extrémité distale (11.4) en forme de J de chaque branche latérale (11) s'étend dans un plan sensiblement horizontal.

6. Lunettes selon l'une des revendications 1 à 5, **caractérisées en ce que** la portion principale (11.2) de chaque branche latérale (11) présente une partie centrale aplatie augmentant la flexibilité de ladite branche dans les directions de manoeuvre de celle-ci.

7. Lunettes selon l'une des revendications 1 à 6, **caractérisées en ce que** la portion longue (11.5) d'extrémité distale de chaque branche latérale(11) présente des picots ou dentures en saillie (11.8) qui s'ancrent dans le manchon souple de serrage (15) quand ladite branche latérale est en place.

8. Lunettes selon l'une des revendications 1 à 7, **caractérisées en ce que** la portion longue (11.5) d'extrémité distale de chaque branche latérale (11) se raccorde à la portion principale (11.2) de la branche par un coude permanent (11.3) formant un angle obtus.

9. Lunettes selon l'une des revendications 1 à 7, **caractérisées en ce que** la portion longue (11.5) d'extrémité distale de chaque branche latérale (11) s'étend depuis l'arrière du verre (V) en étant rectiligne sur une distance au moins égale à l'épaisseur du verre.

10. Lunettes selon l'une des revendications 1 à 9, **caractérisées en ce que** chaque manchon souple de serrage (15) est une pièce rapportée qui est insérée dans le perçage correspondant du verre.

11. Lunettes selon la revendication 10, **caractérisées en ce que** chaque manchon souple de serrage (15) présente à une extrémité une collerette (15.1) venant en appui contre une face du verre (V) correspondant.

12. Lunettes selon l'une des revendications 1 à 9, **caractérisées en ce que** chaque manchon souple de serrage (15) est réalisé in situ lorsque la branche latérale associée (11) est en place, par moulage ou injection de matière plastique dans le perçage correspondant du verre.

13. Lunettes selon l'une des revendications 1 à 12, **caractérisées en ce que** chaque branche latérale (11) est réalisée en fil métallique, en particulier en fil de titane, dont la section ronde est éventuellement aplatie verticalement au niveau de sa partie principale (11.2).

14. Lunettes selon l'une des revendications 1 à 12, **caractérisées en ce que** chaque branche latérale (11) est réalisée en matière plastique, en particulier en polyacétate ou polycarbonate.

## Claims

1. Spectacles of the rimless-type, comprising a bridge (13) interconnecting two lenses (V), and two side arms (11) connected to respective side zones of the corresponding lenses (V), said side arms (11) being hinge-less wire structures suitable for flexing, said spectacles being **characterized in that** each side arm (11) presents a distal end (11.4) arranged to fasten to the side zone of the corresponding lens (V), said distal end being substantially J-shaped, with a long portion (11.5) extending the main portion (11.2) of the arm and passing through a through bore (20) in the lens (V), with a pliable clamping plug (15) being interposed that holds the distal end (11.4) in place, and an anti-pivot short portion (11.6) extending backwards and passing into an outwardly-open side notch (21) or into another through bore (24) in the lens, without clamping the lens between said long portion and said short portion and without pinching effect, the central portion (11.7) that interconnects the long portion (11.5) and the short portion (11.6) extending close to the front face of the lens (V).

2. Spectacles according to claim 1, **characterized in that** each side arm (11) has a main portion (11.2) and a long portion (11.5) at its distal end, which portions are shaped in cross-section and in profile to pass through the through bore (20) in the lens (V), so as to enable said side arm to be put in place merely by being threaded through from the front face of the lens.

3. Spectacles according to claim 1 or claim 2, **characterized in that** each side arm (11) is constituted by a single metal piece.

4. Spectacles according to claim 1 or claim 2, **characterized in that** each side arm (11) is made up of a plurality of pieces that are fitted together.

5. Spectacles according to any one of claims 1 to 4, **characterized in that** the J-shaped distal end (11.4) of each side arm (11) extends in a substantially horizontal plane.

6. Spectacles according to any one of claims 1 to 5, **characterized in that** the main portion (11.2) of each side arm (11) presents a flattened central portion increasing the flexibility of said arm in the directions in which said arm is flexed.

7. Spectacles according to any one of claims 1 to 6, **characterized in that** the long portion (11.5) at the distal end of each side arm (11) is provided with projecting teeth or spikes (11.8) that anchor into the pliable clamping plug (15) when said side arm is in place.

8. Spectacles according to any one of claims 1 to 7, **characterized in that** the long portion (11.5) at the distal end of each side arm (11) is connected to the main portion (11.2) of the arm via a permanent bend (11.3) forming an obtuse angle.

9. Spectacles according to any one of claims 1 to 7, **characterized in that** the long portion (11.5) at the distal end of each side arm (11) extends from the back of the lens (V) in rectilinear manner over a distance of not less than the thickness of the lens.

10. Spectacles according to any one of claims 1 to 9, **characterized in that** each pliable clamping plug (15) is a separate piece that is inserted into the corresponding bore in the lens.

11. Spectacles according to claim 10, **characterized in that**, at one of its ends, each pliable clamping plug (15) has a collar (15.1) that comes into abutment against one face of the corresponding lens (V).

12. Spectacles according to any one of claims 1 to 9, **characterized in that** each pliable clamping plug (15) is formed in situ when the associated side arm (11) is in place, by molding or injecting a plastics material in or into the corresponding bore in the lens.

13. Spectacles according to any one of claims 1 to 12, **characterized in that** each side arm (11) is made of metal wire, in particular titanium wire, of round cross-section that is optionally flattened vertically in its main portion (11.2).

14. Spectacles according to any one of claims 1 to 12, **characterized in that** each side arm (11) is made of a plastics material, in particular of polyacetate or of polycarbonate.

## Patentansprüche

1. Brille vom Typ ohne Fassung, umfassend einen Steg (13), der die beiden Brillengläser (V) verbindet, und zwei seitliche Bügel (11), die mit einem jeweiligen seitlichen Bereich des entsprechenden Glases (V) verbunden sind, wobei die seitlichen Bügel (11) eine Drahtstruktur haben und ohne Gelenkverbindung biegeverformbar sind, **dadurch gekennzeichnet, dass** jeder seitliche Bügel (11) ein distales Ende (11.4) aufweist, das derart ausgebildet ist, dass es sich an dem seitlichen Bereich des Glases (V) einhängen kann, wobei das distale Ende die allgemeine Form eines J hat, mit einem langen Abschnitt (11.5), der den Hauptabschnitt (11.2) des Bügels verlängert und in eine Bohrung (20) hineingeht, die das Glas (V) durchsetzt, unter Zwischenlage einer elastischen Spannhülse (15), die das Halten des distalen Endes (11.4) am Platz gewährleistet, und mit einem kurzen Antirotationsabschnitt (11.6), der nach hinten zurückgeht und in eine offene seitliche Einkerbung (21) oder in eine weitere Bohrung (24), die das Glas durchsetzt, hineingeht, ohne das Glas zwischen dem genannten langen Abschnitt und dem genannten kurzen Abschnitt einzuspannen und ohne Klemmwirkung, wobei sich der zentrale Abschnitt (11.7), der den langen Abschnitt (11.5) und den kurzen Abschnitt (11.6) verbindet, nahe der Vorderseite des Glases (V) erstreckt.

2. Brille nach Anspruch 1, **dadurch gekennzeichnet, dass** jeder seitliche Bügel (11) einen Hauptabschnitt (11.2) und einen langen Abschnitt (11.5) am distalen Ende umfasst, die im Querschnitt und im Profil übereinstimmen, um in die das Glas (V) durchsetzende Bohrung (20) hineinzugehen und so ein Platzieren des genannten seitlichen Bügels durch einfaches Einfädeln von der Vorderseite des Glases aus zu gestatten.

3. Brille nach Anspruch 1 oder Anspruch 2, **dadurch gekennzeichnet, dass** jeder seitliche Bügel (11) aus einem einzigen Metallstück gebildet ist.

4. Brille nach Anspruch 1 oder Anspruch 2, **dadurch gekennzeichnet, dass** jeder seitliche Bügel (11) aus mehreren Stücken gebildet ist, die durch Ineinanderstecken befestigt werden.

5. Brille nach einem der Ansprüche 1 bis 4, **dadurch gekennzeichnet, dass** sich das J-förmige distale Ende (11.4) jedes seitlichen Bügels (11) in einer im Wesentlichen horizontalen Ebene erstreckt.

6. Brille nach einem der Ansprüche 1 bis 5, **dadurch gekennzeichnet, dass** der Hauptabschnitt (11.2) jedes seitlichen Bügels (11) einen zentralen abgeflachten Abschnitt aufweist, der die Flexibilität des genannten Bügels in dessen Bewegungsrichtungen vergrößert.

7. Brille nach einem der Ansprüche 1 bis 6, **dadurch gekennzeichnet, dass** der lange Abschnitt (11.5) am distalen Ende jedes seitlichen Bügels (11) vorspringende Zacken oder Zähne (11.8) aufweist, die sich in der elastischen Spannhülse (15) verankern, wenn der seitliche Bügel am Platz ist.

8. Brille nach einem der Ansprüche 1 bis 7, **dadurch gekennzeichnet, dass** sich der lange Abschnitt (11.5) am distalen Ende jedes seitlichen Bügels (11) an den Hauptabschnitt (11.2) des Bügels über eine dauerhafte Biegung (11.3) anschließt, die einen stumpfen Winkel bildet.

9. Brille nach einem der Ansprüche 1 bis 7, **dadurch gekennzeichnet, dass** sich der lange Abschnitt (11.5) am distalen Ende jedes seitlichen Bügels (11) von der Rückseite des Glases (V) aus erstreckt, indem er über eine Strecke, die mindestens gleich der Dicke des Glases ist, geradlinig verläuft.

10. Brille nach einem der Ansprüche 1 bis 9, **dadurch gekennzeichnet, dass** jede elastische Spannhülse (15) ein vorgefertigtes Teil ist, das in die entsprechende Bohrung des Glases eingefügt wird.

11. Brille nach Anspruch 10, **dadurch gekennzeichnet, dass** jede elastische Spannhülse (15) an einem Ende einen Bund (15.1) aufweist, der an einer Fläche des entsprechenden Glases (V) zur Anlage kommt.

12. Brille nach einem der Ansprüche 1 bis 9, **dadurch gekennzeichnet, dass** jede elastische Spannhülse (15) in situ hergestellt wird, wenn der dazugehörige seitliche Bügel (11) am Platz ist, durch Gießen oder Einspritzen von Kunststoff in die entsprechende Bohrung des Glases.

13. Brille nach einem der Ansprüche 1 bis 12, **dadurch gekennzeichnet, dass** jeder seitliche Bügel (11) aus Metalldraht hergestellt ist, insbesondere aus Titandraht, dessen runder Querschnitt möglicherweise im Bereich seines Hauptabschnittes (11.2) vertikal abgeflacht ist.

14. Brille nach einem der Ansprüche 1 bis 12, **dadurch gekennzeichnet, dass** jeder seitliche Bügel (11) aus Kunststoff hergestellt ist, insbesondere aus Polyacetat oder Polycarbonat.
